Europäisches Patentamt

European Patent Office

Office européen des brevets

(11) Veröffentlichungsnummer: **0 049 818**
**B2**

(12) ## NEUE EUROPÄISCHE PATENTSCHRIFT

(45) Veröffentlichungstag der neuen Patentschrift:
09.03.88

(51) Int. Cl.⁴: **E 21 B 43/22**

(21) Anmeldenummer: 81107762.7

(22) Anmeldetag: 30.09.81

(54) Hochpolymerlösungen mit erhöhtem Fliesswiderstand und Verfahren zu deren Herstellung.

(30) Priorität: 04.10.80 DE 3037630

(43) Veröffentlichungstag der Anmeldung:
21.04.82 Patentblatt 82/16

(45) Bekanntmachung des Hinweises auf die Patenterteilung:
20.03.85 Patentblatt 85/12

(45) Bekanntmachung des Hinweises auf die Entscheidung
über den Einspruch:
09.03.88 Patentblatt 88/10

(84) Benannte Vertragsstaaten:
AT BE DE FR GB IT NL

(56) Entgegenhaltungen:
DE - A - 2 823 640
DE - A - 2 924 663
FR - A - 1 342 919
US - A - 3 684 014
US - A - 3 724 545
US - A - 3 743 018
US - A - 3 746 094
US - A - 3 891 567
US - A - 3 953 342
US - A - 3 971 440
US - A - 4 043 921
US - A - 4 079 011
US - A - 4 143 716

(73) Patentinhaber: HOECHST AKTIENGESELLSCHAFT,
Postfach 80 03 20, D-6230 Frankfurt am Main 80 (DE)
Patentinhaber: Durst, Franz-Josef, Prof. Dr.,
Lerchenstrasse 8, D-7507 Pfinztal-Berghausen (DE)

(72) Erfinder: Interthal, Werner, Dr.,
Dr.-Ludwig-Opel-Strasse 62, D-6090 Rüsselsheim (DE)
Erfinder: Durst, Franz-Josef, Prof. Dr., Lerchenstrasse 8,
D-7507 Pfinztal-Berghausen (DE)
Erfinder: Haas, Raimund, Spitalstrasse 18a,
D-7590 Achern (DE)

(74) Vertreter: Meyer-Dulheuer, Karl-Hermann, Dr. et al,
HOECHST Aktiengesellschaft Zentrale Patentabteilung
Postfach 80 03 20, D-6230 Frankfurt/Main 80 (DE)

ACTORUM AG

## Beschreibung

Es ist bekannt, das Flüssigkeiten mit einem sehr geringen Gehalt an Hochpolymeren (ppm-Bereich) besondere Strömungseigenschaften aufweisen. So treten beispielsweise ausserordentliche Fliesswiderstandserhöhungen auf, wenn diese Lösungen durch konvergierende oder divergierende Strömungsfelder fliessen. Strömungsformen dieser Art stellen sich u.a. beim Eingangsfliessen aus einem grösseren Reservoir in ein enges Rohr oder in einen Ringspalt sowie beim Durchströmen einer Lochblende ein. Weitere typische Beispiele sind die Poren- oder Filterströmungen, wobei die Flüssigkeit durch eine Sandpackung, einen Filter oder eine poröse Gesteinsschicht strömt. Diese Strömungsformen werden auch als Dehnströmungen bezeichnet, weil ein Volumenelement im konvergierenden Teil der Strömung gedehnt wird.

Werden in einer Flüssigkeit, die durch ein bestimmtes Dehnströmungsfeld fliesst, geringe Mengen (1–500 ppm) einer hochpolymeren Substanz aufgelöst, dann beobachtet man ab einer bestimmten Fliessgeschwindigkeit einen drastischen Anstieg des Fliesswiderstandes um bis zum 30fachen.

Als Hochpolymere, die solche Effekte zeigen, wurden u.a. bisher für wässrige Strömungen Polyoxyethylen, Guar Gum, spezielle Polysaccharide und vor allem Polyacrylamide empfohlen, soweit diese ein sehr grosses Molekulargewicht (in der Regel grösser als 100 000) besitzen. Um im Einzelfall zu entscheiden, welche Hochpolymeren in dem geforderten Konzentrationsbereich von 1–500 ppm den drastischen Widerstandsanstieg in Dehnströmungen zeigen, eignet sich sehr gut die in der DE-OS 2 904 848 beschriebene Porenströmungsapparatur und das dort angegebene Messverfahren.

In der Technik sind Dehnströmungen in Form von Filter und Porenströmungen häufig anzutreffen. Die Filtration ist z.B. ein wichtiger Verfahrensschritt bei zahlreichen industriellen Prozessen, während die Porenströmung bei der Kontrolle des Sickerwassers in Baugruben, Deichen und bei Ölunfällen technische Bedeutung erlangt hat. Die Porenströmungen in porösen Gesteinen und Sanden haben darüberhinaus in jüngster Zeit vor allem bei tertiären Erdölfördermassnahmen eine grosse Bedeutung erlangt. Dort werden Verfahren benutzt, die durch das Einpressen verdünnter Polymerlösungen in die ölhaltigen Gesteinsschichten den Durchbruch des Flutwassers stoppen und eine wesentliche Steigerung der Entölung auch feiner Poren durch ein gleichmässigeres Vordringen der Wasserfront bewirken sollen (US-PS 3 724-545). Hierbei wird gefordert, dass die Polymerlösungen einen hohen Fliess-Widerstand zeigen.

Diese auch unter dem Begriff Polymerfluten bekannten Massnahmen leiden jedoch bislang unter einer Reihe entscheidender Mängel. So werden manche Polymere im Porenraum mechanisch oder thermisch abgebaut. Es hat sich auch gezeigt, dass sich insbesondere mit Polyelektrolyten, wie z.B. teilverseiften Polyacrylamiden, in entsalztem Wasser oder in Trinkwasser zwar zufriedenstellende Widerstandserhöhungen bei Dehnströmungen erzielen lassen. Sobald jedoch die Salinität des Flutwassers auf Werte ansteigt, wie sie in der Regel in den erdölhaltigen Formationen anzutreffen sind, bricht der Effekt vollständig zusammen und die Polymerlösung zeigt auch in Dehnströmungen unter Praxisbedingungen nur den zu geringen Fliesswiderstand des reinen Wassers. Um dies zu verhindern, wurden sogar Verfahren vorgeschlagen, mit deren Hilfe unter grossem technischem Aufwand die Salze in der Lagerstätte durch Vorfluten mit Süsswasser ausgewaschen werden sollten, ehe mit dem eigentlichen Polymerfluten begonnen werden kann. Es ist jedoch offensichtlich, dass ein solches Verfahren in der Regel nicht wirtschaftlich ist und sich für die Kontrolle von Sickerwasser von selbst verbietet.

Ein weiterer entscheidender Mangel beim Einsatz verdünnter Polymerlösungen bei Dehnströmungen ergibt sich daraus, dass unter Fliessbedingungen in der Praxis sehr oft überhaupt keine Widerstandserhöhung eintritt. Man könnte dann zwar versuchen, die Strömungsgeschwindigkeit zu erhöhen, um dadurch in den Bereich der Widerstandserhöhung zu gelangen. Dies bedingt jedoch einen überproportionalen Druckanstieg, der technisch zu grossen Schwierigkeiten führt oder auch nicht mehr realisierbar ist.

Wählt man z.B. die üblichen Fliessbedingungen in einem Bohrkern aus einer Erdöllagerstätte mit 0,5 m/Tag, dann kann man mit der in der DE-OS 2 904 848 beschriebenen Apparatur leicht nachprüfen, dass der Einpressdruck für die Polymerlösung selbst in günstigen Fällen verzehn- bis verfünfzigfacht werden muss, ehe der Bereich der ausserordentlichen Widerstandserhöhung um das 3- bis 30fache überhaupt erreicht wird. Das kann dann in der Praxis zu Verhältnissen führen, die sogar das nicht erwünschte Aufbrechen von Gesteinsschichten bewirken. Darüberhinaus werden bei Dehnströmungen über grössere Entfernungen schnell Druckbereiche von mehreren hundert bar erreicht, die technisch kaum noch zu realisieren sind.

Ganz allgemein kann man unter den verschiedensten Dehnströmungsbedingungen feststellen, dass in der Praxis die aussergewöhnliche Widerstandserhöhung durch die Zugabe von geringen Mengen an Hochpolymeren nicht auftritt.

Überraschenderweise wurde nun gefunden, dass sich die geforderte Widerstandserhöhung verdünnter Hochpolymerlösungen unter praktischen Dehnströmungsbedingungen dann in der gewünschten Weise einstellt, wenn man der Hochpolymerlösung zusätzlich eine schnell und vollständig lösliche Komponente mit verdickender Wirkung beimischt. Bei Hochpolymerlösungen, die solche verdickend wirkenden Zusätze enthalten, muss der erforderliche Druck überhaupt nicht oder nur geringfügig um bis zum zweifachen erhöht werden, um eine optimale Widerstandserhöhung zu erreichen.

Verdickte wässrige Lösungen für die Erdölförderung sind bereits aus FR-A 1 342 919 bekannt, die neben einem sulfonierten Hochpolymeren noch eine niedermolekulare Verbindung als Verdicker enthalten.

Gegenstand der Erfindung sind somit wässrige Hochpolymerlösungen mit einem ausserordentlichen erhöhten Fliesswiderstand unter den Bedingungen von Dehnströmungen, wobei die Lösung ein Hochpolymer mit einem Molgewicht über 100 000 sowie vollständig lösliche oder mischbare Cellulosederivate, Polysaccharide, Polyvinylalkohol, Polyvinylpyrrolidon, Polyethylen- oder Polypropylenglykole, unverseifte oder teilverseifte Polyacrylamide, Polyacrylsäureester, Polyphosphate, Polyvinylsulfonate, Polyacrylamido-2-methyl-propansulfonsäure oder Copolymerisate des Acrylamids enthält, die ein Molekulargewicht von weniger als 100 000 aufweisen und die Viskosität der Hochpolymerenlösung auf einen Wert bis zu 1 Pa·s erhöhen, wobei in beiden Fällen solche Polymeren ausgenommen sind, die Arylsulfonate enthalten.

Als derartige Verbindungen, die den Hochpolymerlösungen zugesetzt werden, kommen in Frage wasserlösliche Cellulosederivate, nieder- bis mittelmolekulare Polyglykole und Polysaccharide pflanzlicher oder tierischer Herkunft sowie Polyvinylalkohol, Polyvinylpyrrolidon, unverseifte oder teilverseifte Polyacrylamide, Polyacrylsäureester, Polyphosphate, Polyvinylsulfonate oder Poly-acrylamido-2-methyl-propansulfonsäure, die ein Molekulargewicht unter 100 000, insbesondere unter 60 000, haben und die Viskosität der Hochpolymerlösung auf einen Wert bis zu 1 Pa·s erhöhen.

Als wasserlösliche Cellulosederivate sind beispielsweise zu nennen nichtvernetzte Verbindungen wie Hydroxyethylcellulose, Methylhydroxyethylcellulose, Carboxymethylcellulose und Methylcellulose. Als Polysaccharide kommen Verbindungen wie Dextrane und Pululane in Frage.

Die Konzentration dieser Zusatz-Verbindungen in der Hochpolymerenlösung wird so gewählt, dass sich die geforderte Viskosität von bis zu 1 Pa·s einstellt. Vorzugsweise stellt man die Viskosität auch auf 200 m bis 1 Pa·s, insbesondere auf 50 bis 500 mPa·s und ganz besonders bevorzugt auf 5 bis 200 mPa·s, ein. In der Regel benötigt man, um auf diese Viskosität zu kommen, max. ca. 20 Gew.%, vorzugsweise bis zu 5 Gew.%, insbesondere bis zu 1 Gew.% dieser Zusatz-Verbindungen, bezogen auf die Gesamtlösung.

Wirksam im Sinne der Erfindung sind auch Lösungen, die ein sogenanntes bimodal verteiltes Polymer gleicher chemischer Zusammensetzung enthalten, d.h. Lösungen, die beispielsweise ein hochpolymeres Polyacrylamid (Molgewicht >10⁵) und als Zusatz-Verbindung ebenfalls ein Polyacrylamid aber mit einem Molgewicht <100 000 enthalten. Für solche bimodalen Systeme eignen sich besonders die bereits oben genannten Polyethylenglykole, teilverseiften oder unverseiften Polyacrylamide, Polysaccharide, Polyacrylsäureester, Polyphosphate, Polyvinylsulfonate oder Polyacrylamido-2-methylpropansulfonsäure, wobei jedes dieser Polymeren in der niedermolekularen Form zusammen mit einem anderen Polymeren in dessen hochmolekularer Form eingesetzt werden kann. Es kommen auch Copolymere z.B. des Acrylamids mit Acrylamido-2-methylpropansulfonsäure, Vinylsulfonsäure, Vinylpyrrolidon und Vinylmethylacetamid infrage, wobei das Polymer mindestens 40 Mol% Acrylsäureamid enthält.

Die Verwendung eines dieser Hochpolymeren allein in höheren Konzentrationen, d.h. deutlich über 500 ppm, verbietet sich, weil solche Lösungen nur unter grossem technischem Aufwand herzustellen sind, zu Gelteilchenbildung neigen und nicht vollkommen homogen sind. Dadurch verstopfen dann die Dehnströmungskanäle, insbesondere bei Porenströmungen. Ein kontrolliertes Fliessen ist dann nicht mehr möglich. Baut man die Hochpolymeren in solchen Lösungen durch starke Scherkräfte ab, wie es in der DE-OS 2 733 852 beschrieben wird, um zu homogenen, nicht verstopfenden Lösungen zu gelangen, ist das Hochpolymere zerstört und wirkt nicht mehr im Sinne der Erfindung.

Es versteht sich, dass die Zusatz-Verbindungen insgesamt so gewählt werden, dass es in der Lösung zu keinen Ausfällungen kommt.

Welche Konzentrationen und Zusammensetzungen jeweils im Einzelfall am besten geeignet sind, kann mit verschiedenen, in der Literatur beschriebenen Labormessanordnungen bestimmt werden. (A. Quibrahim et al. in J. Non-Newtonian Fluid Mechanics 7 (1980), S. 315; D.F. James et al. in J. Fluid Mech. 97 (4) (1980), S. 655).

Unter dem Begriff «Hochpolymere» in den Hochpolymerlösungen sind solche Polymere zu verstehen, die ein Molekulargewicht über 100 000 besitzen. Diese Hochpolymeren sind in der Lösung in Mengen von ca. 1 bis 500 ppm enthalten.

Besonders einfach und schnell lassen sich die Effekte mit der in der DE-OS 2 904 848 beschriebenen Porenströmungsapparatur messen. Man kann mit einer solchen Messanordnung leicht herausfinden, mit welchen Polymerkonzentrationen sich eine optimale Fliesswiderstandserhöhung für eine gegebene Einpressgeschwindigkeit erreichen lässt. Man stellt z.B. bei der tertiären Erdölforderung die Widerstandserhöhung zweckmässigerweise auf einen solchen Wert ein, dass das Öl denselben oder einen geringeren Fliesswiderstand wie das Flutmedium besitzt.

Die Herstellung der erfindungsgemässen Hochpolymerlösungen erfolgt zweckmässigerweise, indem man zunächst das Hochpolymer in Wasser löst und die Zusatz-Verbindung entweder in Substanz oder in Form einer höher konzentrierten Stammlösung zugibt. Zu diesem Zweck geeignete Löse- und Einspeiseverfahren sind aus der verfahrenstechnischen Literatur hinreichend bekannt. Soweit die Zusatz-Verbindungen flüssig sind, kann man auch so vorgehen, dass man das Hochpolymeren direkt in der Zusatz-Verbindung in Mengen von 1 bis 500 ppm löst. Die Hochpolymerenlösung kann in diesem Fall dann weitgehend wasserfrei sein.

Der Vorteil der Hochpolymerenlösungen gemäss der vorliegenden Erfindung liegt daran, dass man durch die Zusatz-Verbindung zwar eine Erhöhung der Viskosität erreicht, die Polymerlösungen aber trotzdem völlig homogen sind. Durch diese Viskositätserhöhung erreicht man eine gezielte Einstellung des aussergewöhnlichen Widerstandsverhaltens dieser Polymerlösungen bei Dehnströmungen, etwa bei Porenströmungen, wobei es hier zur Erreichung dieses speziellen Widerstandseffektes nur einer relativ geringfügigen Erhöhung des Druckes bedarf. Bei Polymerlösungen ohne Zusatz dagegen benötigt man zur Einstellung der Widerstandserhöhung in Dehnströmungen einen unverhältnismässig höheren Druck, der eine Nutzung dieses Effektes von verdünnten Hochpolymerlösungen in der Praxis verhindert.

Die gezielte Einstellung des Widerstandsverhaltens bei den erfindungsgemässen Hochpolymerenlösungen bewirkt, dass die Front der Polymerlösung gleichmässig in Dehnströmen (z.B. in Poren) voranschreitet und so z.B. bei der tertiären Erdölförderung das gefürchtete «fingering» verhindert, oder, falls es bereits aufgetreten ist, wieder unterbindet. Ebenso kann man mit den erfindungsgemässen Hochpolymerlösungen Leckverluste minimisieren.

Beispiel 1

Ein nach DE-OS 2 807 709, Beispiel 1, Polymer I, hergestelltes 30% teilverseiftes Polyacrylamid wurde in der in DE-OS 2 904 848 beschriebenen Porenströmungsapparatur mit einer Glaskugelschüttung von 392 μm mittlerem Kugeldurchmesser in einer Konzentration von 50 ppm untersucht. Gelöst in entsalztem Wasser zeigt diese Hochpolymerlösung bei einer mittleren Fliessgeschwindigkeit von 0,6 m/h eine Widerstandserhöhung m gegenüber reinem Wasser um das 3,5fache.

$$m = \frac{\text{Fliesswiderstand der Hochpolymerlösung}}{\text{Fliesswiderstand des Lösungsmittels}}$$

Gibt man zu dieser Hochpolymerlösung 0,1 Gew.% Calciumchlorid und löst es darin auf, dann zeigt eine erneute Messung unter den oben angegebenen Bedingungen keine Widerstandserhöhung mehr und das Fliessverhalten gleicht dem des reinen Wassers.

Löst man jetzt in dieser salzhaltigen Hochpolymerlösung zusätzlich 0,6 Gew.% einer Methylhydroxyethylcellulose auf, so dass die Lösung eine Viskosität von 17 mPa·s besitzt, dann erhält man unter den gleichen Strömungsbedingungen wie oben eine Widerstandserhöhung um das 10fache. Dabei muss der Druck nur geringfügig um 20% gesteigert werden. Die benutzte Methylhydroxyethylcellulose besitzt eine Viskosität von 4000 mPa·s, gemessen als 2%ige wässrige Lösung in einem Höppler-Kugelfall-Viskosimeter.

Beispiel 2

Der Versuch wird wie in Beispiel 1 ausgeführt, nur wird jetzt anstelle von Calciumchlorid 6% Natriumchlorid aufgelöst. Die Werte der Widerstandserhöhung gegenüber Wasser ergeben sich jetzt wie folgt:

|  | m |
|---|---|
| 50 ppm Polymer I in entsalztem Wasser | 3,5 |
| 50 ppm Polymer I + 6% NaCl in entsalztem Wasser | 0 |
| 50 ppm Polymer I + 6% NaCl + 0,6% Tylose H 9000 mit entsalztem Wasser | 10 |

Beispiel 3

Anstelle der Glaskugeln in der Porenströmungsapparatur wird eine breit verteilte Sandschüttung mit einem mittleren Korndurchmesser von ebenfalls 392 μm verwendet. Ansonsten wird der Versuch wie in Beispiel 2 durchgeführt. Es werden dieselben wie in Beispiel 2 angegebenen Ergebnisse erhalten.

Beispiel 4

Ein Polyethylenoxid mit einem Molekulargewicht von $4.10^6$ wurde in der in DE-OS 2 904 848 beschriebenen Porenströmungsapparatur mit einer Glaskugelschüttung von 392 μm mittlerem Kugeldurchmesser in einer Konzentration von 50 ppm mit 2% Calciumchlorid in Wasser untersucht. Der Beginn der ausserordentlichen Widerstandserhöhung um das 10fache trat bei einer mittleren Geschwindigkeit von $1,4 \cdot 10^{-2}$ m/s ein. Bei einer Geschwindigkeit von $10^{-3}$ m/s war kein Effekt zu beobachten. Um von $10^{-3}$ m/s auf 1,4 m/s und damit in den Bereich der Widerstandserhöhung zu gelangen, muss der Druck vervierzehnfacht werden.

Stellt man jetzt zunächst eine Mischung aus 35% Wasser und 45% Glycerin mit 2% Calciumchlorid und 50 ppm Polymer I her und misst diese Mischung wie vorher durch, findet man jetzt bereits bei $10^{-3}$ m/s denselben drastischen Widerstandsanstieg um das 10fache und muss dabei den Einpressdruck nur um 30% steigern.

Gleiche Ergebnisse erzielt man, wenn man anstelle des Glycerins folgende Produkte einsetzt: 0,6% Dextran, 1% Polyvinylalkohol (MG 80 000).

Beispiel 5

Wenn in einer Erdöllagerstätte mit einer Porosität von 0,4 und einem mittleren Porendurchmesser von 5 μm die aktuellen Fliessbedingungen bei einer mittleren Geschwindigkeit von 0,5 m/Tag liegen, dann stellt sich unter diesen Fliessbedingungen bei Anwesenheit von geringen Salzmengen im Flutwasser keine aussergewöhnliche Fliesswiderstandserhöhung ein, wenn z.B. Polymer I mit einer Konzentration von 100 ppm zugegeben wird. Das würde erst bei einer Geschwindigkeit von 5 m/Tag geschehen. Bei dieser Geschwindigkeit müsste der Einpressdruck verzehnfacht werden und das Gebirge würde stellenweise aufgebrochen und die Lagerstätte verdorben. Setzt man dem Flutwasser vor der Hochpolymerzugabe eine Hydroxyethylcellulose mit einer Viskositätsstufe von 10 000 in einer Konzentration von 0,3 Gew.% zu, dann tritt die 10fache Widerstandserhöhung bereits bei 0,5 m/Tag aktueller Fliessgeschwindigkeit im Gebirge auf, wobei der Druck nur um 20% gesteigert werden muss.

**Beispiel 6**

Fliesst eine wässrige Lösung eines Polyoxyethylens mit einem Molekulargewicht von $4 \cdot 10^6$ in einer Konzentration von 50 ppm durch eine Lochblendenströmung mit einem Kontraktionsverhältnis 0,234, dann tritt eine Widerstandserhöhung um das 5fache bei einer Strömungsgeschwindigkeit von $7 \cdot 10^{-3}$ m/s auf. Um denselben Effekt bereits bei $7 \cdot 10^{-4}$ m/s zu erhalten, wurde eine Lösung aus 85% Wasser und 15% Polyethylenglykol mit einem Molekulargewicht von 15 000 mit 50 ppm des oben erwähnten Hochpolymers hergestellt. Dabei musste der Druck nur um 30% gesteigert werden.

**Patentansprüche**

1. Wässrige Hochpolymerlösungen mit einem ausserordentlichen erhöhten Fliesswiderstand unter den Bedingungen von Dehnströmungen, dadurch gekennzeichnet, dass die Lösung ein Hochpolymer mit einem Molgewicht über 100 000 sowie vollständig lösliche oder mischbare Cellulosederivate, Polysaccharide, Polyvinylalkohol, Polyvinylpyrrolidon, Polyethylen- oder Polypropylenglykole, unverseifte oder teilverseifte Polyacrylamide, Polyacrylsäureester, Polyphosphate, Polyvinylsulfonate, Polyacrylamido-2-methylpropansulfonsäure oder Copolymerisate des Acrylamids enthält, die ein Molekulargewicht von weniger als 100 000 aufweisen und die Viskosität der Hochpolymerenlösung auf einen Wert bis zu 1 Pa·s erhöhen, wobei in beiden Fällen solche Polymeren ausgenommen sind, die Arylsulfonate enthalten.

2. Hochpolymerlösungen nach Anspruch 1, dadurch gekennzeichnet, dass sie Verbindungen enthalten, die die Viskosität auf 200 mPa·s bis 1 Pa·s erhöhen.

3. Hochpolymerlösungen nach Anspruch 1, dadurch gekennzeichnet, dass sie Verbindungen enthalten, die die Viskosität auf 50 bis 500 mPa·s erhöhen.

4. Hochpolymerlösungen nach Anspruch 1, dadurch gekennzeichnet, dass sie Verbindungen enthalten, die die Viskosität auf 5 bis 200 mPa·s erhöhen.

5. Verfahren zur Herstellung von wässrigen Hochpolymerlösungen mit einem ausserordentlichen erhöhten Fliesswiderstand unter den Bedingungen von Dehnströmungen, dadurch gekennzeichnet, dass man eine Lösung eines Hochpolymers mit einem Molgewicht über 100 000 mit einem vollständig löslichen oder mischbaren Cellulosederivat, Polysaccharid, Polyvinylalkohol, Polyvinylpyrrolidon, Polyethylen- oder Polypropylenglykol, unverseiften oder teilverseiften Polyacrylamid, Polyacrylsäureester, Polyphosphat, Polyvinylsulfonat, Polyacrylamido-2-methyl-propansulfonsäure oder Copolymerisat des Acrylamids, die ein Molekulargewicht von weniger als 100 000 aufweisen und die Viskosität der Hochpolymerenlösung auf einen Wert bis zu 1 Pa·s erhöhen, vermischt oder diese Verbindung in der wässrigen Lösung des Hochpolymeren löst, wobei in beiden Fällen solche Polymeren ausgenommen sind, die Arylsulfonate enthalten.

6. Verwendung der Hochpolymerlösungen nach Anspruch 1 bei der Tertiärförderung von Erdöl.

**Claims**

1. High polymer solutions having an extremely increased drag under conditions of elongation flow which are characterized in that the solutions contain a high polymer having a molecular weight of more than 100 000 and completely soluble or miscible cellulose derivatives, polysaccharides, polyvinyl alcohol, polyvinyl pyrrolidone, polyethylene or polypropylene glycols, unsaponified or partially saponified polyacrylamides, polyacrylic acid esters, polyphosphates, polyvinylsulfonates, polyacrylamido-2-methylpropane sulfonic acid or copolymers or acrylamide which have a molecular weight of less than 100 000 and which increase the viscosity of the high polymer solution to a value of up to 1 Pa·s, in both cases those polymers being excluded which contain arylsulfonates.

2. High polymer solutions as claimed in claim 1, wherein there are contained compounds which increase the viscosity to 200 mPa·s to 1 Pa·s.

3. High polymer solutions as claimed in claim 1, wherein there are contained compounds which increase the viscosity to 50–500 mPa·s.

4. High polymer solutions as claimed in claim 1, wherein there are contained compounds which increase the viscosity to 5–200 mPa·s.

5. Process for the manufacture of high polymer solutions having an extremely increased drag under conditions of elongation flow, which is characterized in that the solutions containing a high polymer having a molecular weight of more than 100 000 are mixed with a completely soluble or miscible cellulose derivative, polysaccharide, polyvinyl alcohol, polyvinyl pyrrolidone, polyethylene or polypropylene glycol, unsaponified or partially saponified polyacrylamide, polyacrylic acid ester, polyphosphate, polyvinylsulfonate, polyacrylamido-2-methylpropane sulfonic acid or copolymer of acrylamide which have a molecular weight of less than 100 000 and which increase the viscosity of the high polymer solution to a value of up to 1 Pa·s, or these compounds are dissolved in the aqueous solution of the high polymer, in both cases those polymers being excluded which contain arylsulfonates.

6. Method of using the high polymer solutions as claimed in claim 1 in the tertiary oil production.

**Revendications**

1. Solutions aqueuses de hauts polymères ayant une résistance à l'écoulement considérablement augmentée dans des conditions d'écoulement avec déformation, caractérisées en ce que la solution contient un haut polymère ayant une masse moléculaire supérieure à 100 000 ainsi qu'un composé totalement soluble ou miscible choisi parmi les dérivés de cellulose, les polysaccharides, l'alcool polyvinylique, la polyvinylpyrrolidone, les polyéthylène- ou polypropylène-glycols, les polyacrylamides non saponifiés ou partiellement saponifiés, les esters d'acide polyacrylique, les polyphosphates, les polyvinylsulfonates, les acides polyacrylamido-2-méthylpropanesulfoniques et les copolymérisats d'acrylamide, qui présente une masse moléculaire inférieure à 100 000 et qui élève la viscosité de la solution de haut polymère à une valeur allant jusqu'à 1 Pa·s, les polymères qui contiennent des arylsulfonates étant exclus dans les deux cas.

2. Solutions de hauts polymères telles que définies sous 1, caractérisées en ce qu'elles contiennent des composés qui augmentent la viscosité à une valeur de 200 mPa à 1 Pa·s.

3. Solutions de hauts polymères telles que définies sous 1, caractérisées en ce qu'elles contiennent des composés qui augmentent la viscosité à une valeur de 50 à 500 mPa·s.

4. Solutions de hauts polymères telles que définies sous 1, caractérisées en ce qu'elles contiennent des composés qui augmentent la viscosité à une valeur de 5 à 200 mPa·s.

5. Procédé de préparation de solutions aqueuses de hauts polymères ayant une résistance à l'écoulement considérablement augmentée dans des conditions d'écoulement avec déformation, caractérisé en ce que l'on mélange une solution d'un haut polymère ayant une masse moléculaire supérieure à 100 000 avec un composé totalement soluble ou miscible choisi parmi les dérivés de cellulose, les polysaccharides, l'alcool polyvinylique, la polyvinylpyrrolidone, les polyéthylène- ou polypropylène-glycols, les polyacrylamides non saponifiés ou partiellement saponifiés, les esters d'acide polyacrylique, les polyphosphates, les polyvinylsulfonates, les acides polyacrylamido-2-méthyl propanesulfoniques et les copolymérisats d'acrylamide, qui présente une masse moléculaire inférieure à 100 000 et qui élève la viscosité de la solution de haut polymère à une valeur allant jusqu'à 1 Pa·s, ou bien on dissout ce composé dans la solution aqueuse du haut polymère, les polymères qui contienennt des arylsulfonates étant exclus dans les deux cas.

6. L'utilisation des solutions de hauts polymères telles que définies sous 1, pour l'exploitation tertiaire du pétrole.